# EUROPÄISCHE PATENTSCHRIFT

(11) **EP 0 889 769 B1**
(45) Veröffentlichungstag und Bekanntmachung des Hinweises auf die Patenterteilung: **16.10.2002**
(21) Anmeldenummer: 97919263.0
(22) Anmeldetag: 12.03.1997
(51) Int. Cl.: B23K 26/00

(54) **VERFAHREN ZUM FÜGEN VON WERKSTÜCKEN MIT LASERSTRAHLUNG**
PROCESS FOR JOINING OF WORKPIECES WITH LASER BEAM
PROCEDE POUR ASSEMBLER DES PIECES AU MOYEN D'UN FAISCEAU LASER

(30) Priorität: 15.03.1996 DE 19610242
(43) Veröffentlichungstag der Anmeldung: 13.01.1999
(73) Patentinhaber: FRAUNHOFER-GESELLSCHAFT ZUR FÖRDERUNG DER ANGEWANDTEN FORSCHUNG E.V., 80636 München (DE); Crea, centre de Recherches et d'Etudes d'Arcueil, 94114 Arcueil Cédex (FR)
(72) Erfinder: KOERBER, Christian, D-52062 Aachen (DE); MENAGER, Thierry, F-91450 Soisy-sur-Seine (FR); DESHORS, Gilles, F-75018 Paris (FR)
(74) Vertreter: Draudt, Axel Hermann Christian, Dipl.-Ing.
(86) Internationale Anmeldenummer: DE9700470
(87) Internationale Veröffentlichungsnummer: WO97034729

(56) Entgegenhaltungen:
- EP-A- 0 570 152
- DE-A- 3 820 848
- US-A- 4 803 334

## Beschreibung

Die Erfindung bezieht sich auf ein Verfahren zum Fügen von Werkstücken, insbesondere von Grobblechen, mit Laserstrahlung, insbesondere mit CO₂-Laserstrahlung, die auf eine Fügestelle fokussiert wird, bei dem ein relativer Vorschub der Werkstücke zur Laserstrahlung erfolgt, bei dem der Fügestelle aufschmelzbarer Zusatzwerkstoff in relativer Vorschubrichtung hinter der Laserstrahlung durch Eintauchen in ein Schmelzbad zugeführt wird, und bei dem die Laserstrahlung zusätzlich zu der relativen Vorschubbewegung oszilliert wird,

Insbesondere beim Schweißen von Grobblechen mit CO₂-Laserstrahlung sind die Einsatzmöglichkeiten in mehrfacher Hinsicht begrenzt. Die Weite des Spalts zwischen den Werkstückkanten und deren Höhenversatz nehmen Einfluß auf das Fügeergebnis, wie auch die Oberflächengüte der zu fügenden Werkstückkanten und die Positioniergenauigkeit des Laserstrahls relativ zum Spalt. Um auch Werkstücke mit größeren Spalten zwischen den Werkstückkanten fügen zu können, ist es allgemein bekannt, Zusatzwerkstoff einzusetzen. Das dem Spalt entsprechende Fehlvolumen wird durch den Zusatzwerkstoff aufgefüllt. Bei großen Spalten besteht jedoch das Problem von Flankenbindefehlern. Der verwendete Zusatzwerkstoff kann mit dem Grundwerkstoff der Werkstücke keine Verbindung eingehen, da dieser Grundwerkstoff nicht mehr ausreichend durch den Laserstrahl erwärmt wird. Infolgedessen ist das Fügen mit Laserstrahlung in der industriellen Fertigung und insbesondere im Grobblechbereich im Schiffbau, Stahlbau etc. nur eingeschränkt einsetzbar.

Ein Verfahren mit den eingangs genannten Verfahrensschritten ist aus der US-A-4,803,334 bekannt. Bei diesem Verfahren wird ein linienförmiger oder ein rechtwinklig geformter Strahlfleck quer zu einer Naht oszilliert, um ein flaches Schmelzbad zu erzeugen. Der Zusatzwerkstoff wird in das Schmelzbad und zugleich in den Schwenkbereich der Laserstrahlung geführt. Infolgedessen ist dieses Verfahren zum Fügen von Grobblechen nicht geeignet, bei dem wegen der erheblichen Dicke der Bleche mit einem Tiefschweißeffekt gearbeitet werden muß.

Ein gattungsähnliches Verfahren mit eingangs genannten Verfahrensschritten, jedoch ohne Eintauchen des Zusatzwerkstoffs in ein Schmelzbad und mit abweichender Zuführung ist aus der DE-A-38 20 848 bekannt. Das zusätzlich zu der relativen Vorschubbewegung erfolgende Oszillieren der Laserstrahlung erfolgt in relativer Vorschubrichtung der Werkstücke derart, daß die Laserstrahlung auf den Zusatzwerkstoff verschwenkbar ist. Hierbei kommt es jedoch dazu, daß der Zusatzwerkstoff nicht nur aufgeschmolzen, sondern auch zumindest zum Teil verdampft wird. Hierdurch wird der Fügeprozeß gestört. Außerdem ist vorgesehen, daß die Zuführung des drahtförmigen Zusatzwerkstoffs in relativer Vorschubrichtung vor der Laserstrahlung erfolgt, also in den nicht gefügten Bereich der Werkstücke. Der Zusatzwerkstoff gelangt daher zuerst in den Bereich der Schmelzfront, was wegen der zuvor erfolgten ungleichmäßigen Aufschmelzung des Zusatzwerkstoffs unerwünscht ist.

Der Erfindung liegt daher die Aufgabe zugrunde, ein Verfahren mit den eingangs genannten Verfahrensschritten so zu verbessern, daß das Laserstrahlschweißen auch beim Fügen von Grobblechen mit CO₂-Laserstrahlung unabhängig von Kantenvorbereitungen hinsichtlich der Maß- und Formabweichungen, des Versatzes und der Kantengüte durchgeführt werden kann, insbesondere ohne die Nachteile der Zuführung von drahtförmigen Zusatzwerkstoff bei dessen Aufschmelzen durch Laserstrahlung außerhalb der Fügestelle in Kauf nehmen zu müssen.

Diese Aufgabe wird dadurch gelöst, eine Zuführstelle des Zusatzwerkstoffs in das Schmelzbad auf einem vorbestimmten Abstand von einem Zentrum der Strahloszillation außerhalb der Laserstrahlung gehalten wird, die im Bereich des Schmelzbades eine Dampfkapillare ausbildet.

Für das Verfahren ist es von Bedeutung, daß die Laserstrahlung und der Zusatzwerkstoff nicht direkt zusammenwirken. Infolgedessen wird ausgeschlossen, daß eine zumindest teilweise Verdampfung des Zusatzwerkstoffs erfolgt, die den Fügeprozeß stört. Statt dessen wird das Schmelzbad benutzt, um den Zusatzwerkstoff aufzuschmelzen. Es ergibt sich eine innige Durchmischung des aufgeschmolzenen Zusatzwerkstoffs und des von der Laserstrahlung aufgeschmolzenen Werkstückstoffs der Kanten der Werkstücke. Dabei kann die Zufuhr von Zusatzwerkstoff so dosiert werden, daß das aus einem evtl. Spalt resultierende Fehlvolumen ersetzt wird. Auch bei größeren Spaltweiten wird der Zusatzwerkstoff vollständig an den Grundwerkstoff der Werkstücke angebunden, so daß Flankenbindefehler vermieden werden. Es ist ohne besonderen Einfluß, daß die Kanten infolge einer entsprechend wenig aufwendigen Kantenvorbereitung Maß- und Formabweichungen im Bereich des Spalts sowie evtl. einen Höhenversatz und eine geringe Kantengüte aufweisen. Es können Grobbleche mit Dicken (s ≤ 25mm) unter Ausnutzung des Tiefschweißeffekts mit kommerziell erhältlichen Strahlquellen (P_{L} ≤ 25kW) verschweißt werden. Die Qualität der erzeugten Schweißnähte entspricht den Anforderungen nach DIN 8563 T11.

Das Verfahren wird dahingehend durchgeführt, daß die Zuführstelle des Zusatzwerkstoffs in das Schmelzbad auf einem vorbestimmten Abstand vom Zentrum der Strahloszillation gehalten wird. Ein solcher Abstand wird beispielsweise durch die maximale relative Vorschubgeschwindigkeit bestimmt. Es wird gewährleistet, daß der Zusatzwerkstoff nicht in den Strahlungsbereich der Laserstrahlung gelangt, wo er direkt mit Laserstrahlung beaufschlagt werden könnte.

Das Oszillieren der Laserstrahlung kann auf den Einsatzzweck abgestimmt werden, also auf das jeweils spezielle Fügeproblem. In den meisten Fällen wird jedoch die Spaltweite eine dominierende Rolle spielen, so daß das Verfahren vorteilhafterweise derart durchgeführt wird, daß die Strahloszillation überwiegend quer zur Vorschubrichtung der Werkstücke erfolgt. Das quer zur Vorschubrichtung der Werkstücke erfolgende Oszillieren der Laserstrahlung führt zu einem Überbrücken der Spaltweite bzw. zu einem größeren Aufschmelzen von Kantenbereichen der Werkstücke, so daß der Grundwerkstoff der Werkstücke und der Zusatzwerkstoff vollständig und flankenbindefehlerfrei miteinander verbunden werden. Das ist insbesondere gegeben, wenn die einen Spalt bildenden Kanten der Werkstücke beim Oszillieren der Laserstrahlung aufgeschmolzen werden.

Das Verfahren kann so durchgeführt werden, daß die Strahloszillation mindestens einer Kreisfunktion entsprechend erfolgt. Über die Länge der Fügenaht gesehen ergibt sich infolge der relativen Vorschubbewegung ein sinusartiges Hinund Herschwingen der Laserstrahlung.

Es ist ohne weiteres möglich, das Verfahren durchzuführen, indem die das Fügeverfahren destabilisierenden Einflüsse meßtechnisch erfaßt werden, wie beispielsweise die Spaltweite, um dementsprechend Verfahrensparameter so zu beeinflussen, daß die negativen Einflüsse ausgeglichen werden. Hierzu ist jedoch ein entsprechender Meß- und Regeleinrichtungsaufwand erforderlich. Um einen solchen Aufwand zu sparen, kann das Verfahren derart durchgeführt werden, daß der Zusatzwerkstoff mit konstanter oder angepaßter Zuführrate zugeführt wird, die auf eine mittlere Spaltweite des Spaltes zwischen den Werkstückkanten optimiert ist. Im Fall kleinerer Spalte wird das zuviel eingebrachte Material durch die Strahloszillation gleichmäßig verteilt, ohne daß eine nach DIN 8563 T11 unzulässige Überwölbung der Naht stattfindet. Bei größeren Spaltweiten wird gleichwohl eine ausreichende Nahtqualität erreicht.

Das Verfahren kann so durchgeführt werden, daß trotz der Strahloszillation eine praktisch intensitätskonstante Laserstrahlung verwendet wird. Dadurch ergibt sich eine entsprechend konstante Energiezufuhr zur Fügestelle. Das Schmelzbad der Fügestelle wird infolgedessen auf einer möglichst hohen Temperatur gehalten, so daß das Aufschmelzen des Zusatzwerkstoffs besonders unproblematisch ist.

In konstruktiv einfacher Weise kann so verfahren werden, daß der Zusatzwerkstoff als Draht mit einem Schutzgasschweißbrenner zugeführt wird. Das ist insbesondere ohne weiteres dann möglich, wenn die Zuführstelle des Zusatzwerkstoffs in das Schmelzbad auf einem vorbestimmten Abstand vom Zentrum der Strahloszillation gehalten wird, da dann die radiale bzw. räumliche Ausdehnung des Schutzgasschweißbrenners nicht stört.

Die Erfindung wird anhand einer in der Zeichnung beispielsweise dargestellten Einrichtung zur Durchführung des Verfahrens näher erläutert. Es zeigt:
- Fig.1: eine schematische Seitenansicht im Bereich einer Fügestelle zweier Werkstücke,
- Fig.2: den Schnitt B-B der Fig.1 in ebenfalls schematischer Darstellung.

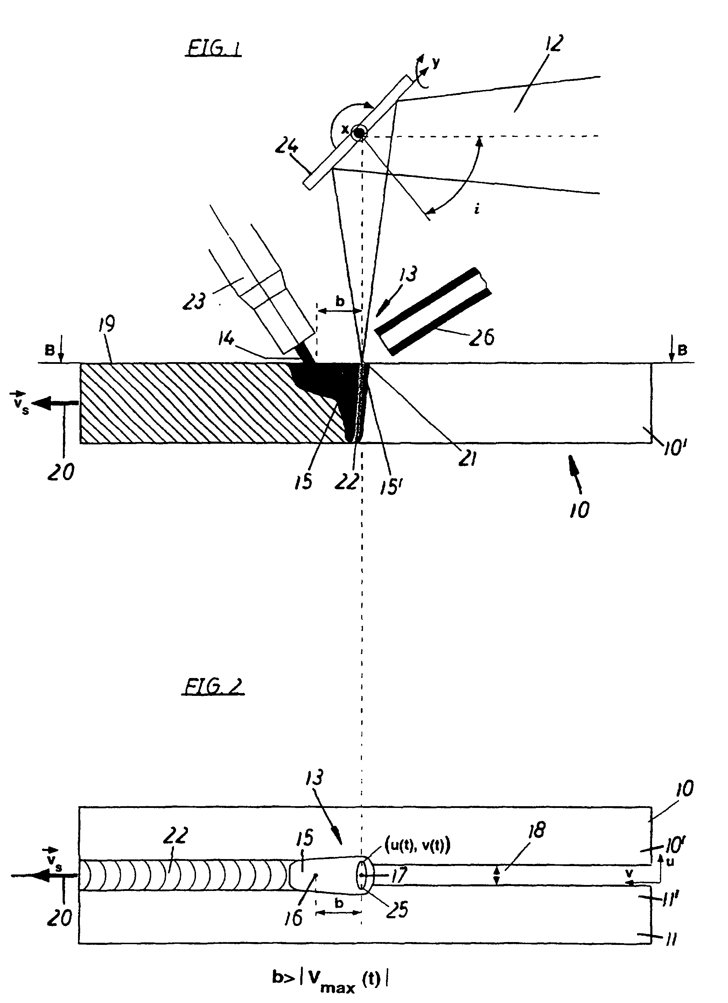

Die Fig.1,2 zeigen zwei Werkstücke 10,11, die an ihren Kanten 10',11' miteinander verschweißt werden sollen. Zwischen beiden Werkstückkanten 10',11' befindet sich ein Spalt 18, der beim Fügen geschlossen werden muß. In der Praxis hat dieser Spalt 18 eine schwankende Spaltbreite und es ist auch durchaus möglich, daß die Werkstücke 10,11 einen Versatz aufweisen, so daß sie nicht gemäß Fig.1 in derselben Ebene liegen. Auch die Kantengüte der Kanten 10',11' kann durchaus unterschiedlich sein, beispielsweise durch das Herstellen der Werkstücke 10,11 beim Schneiden. Es kann unterstellt werden, daß die Kanten 10',11' beim Fügen ohne besondere Kantenvorbereitung verwendet werden.

Das Fügen erfolgt mittels Laserstrahlung 12, die in den Bereich der Fügestelle 13 auf die Werkstückoberfläche der Werkstücke 10,11 gestrahlt wird. Die Laserstrahlung ist in nicht dargestellter Weise fokussiert, so daß sie einen Fokus 21 hat, der im Bereich der Ebene der Werkstückoberfläche 19 liegt.

Mit Hilfe der Laserstrahlung 12 wird Werkstoff aufgeschmolzen, so daß ein Schmelzbad 15 entsteht, wobei sich im Falle des hier dargestellten Tiefschweißeffekts eine Dampfkapillare 22 ergibt. Das Schmelzbad 15 hat eine Schmelzfront 15' und eine in Fig.1 auf der anderen Seite gelegene Schmelzbadschleppe.

Die Werkstücke 10,11 werden relativ zur Laserstrahlung 12 bewegt. Beispielsweise steht eine nicht näher dargestellte Bearbeitungsoptik für die Laserstrahlung 12 fest, während die Werkstücke 10,11 bewegt werden, und zwar in der relativen Vorschubrichtung 20 mit der in den Figuren angegebenen Vorschubgeschwindigkeit v_{S}. Das Schmelzbad 15 erstreckt sich in der relativen Vorschubrichtung 20 unter Abkühlung zur Fügenaht 22.

Es ist vorgesehen, daß die Laserstrahlung 12 zusätzlich zu ihrer infolge Vorschubs erfolgenden relativen Bewegung bezüglich der Werkstücke 10,11 oszilliert wird. Die Strahloszillation kann grundsätzlich quer zur Vorschubrichtung 20 und in dieser Vorschubrichtung 20 erfolgen. Die Vorschubrichtung ist in Fig.2 mit v und die Richtung quer zur Vorschubrichtung 20 ist in Fig.2 mit u bezeichnet. Die Laserstrahlung 12 kann um ihren Fokus 17 eine parametrische Kurve 25 (u(t), v(t)) beschreiben, die den Anforderungen an das Fügeverfahren entsprechend ausgebildet wird. Fig.2 zeigt eine elliptische Kurve (u(t), v(t)), die also aus mehreren Kreisfunktionen zusammengesetzt ist. Die Strahloszillation in Richtung u, also quer zur Vorschubrichtung, ist größer, als die Strahloszillation in Richtung v, also in Richtung der Vorschubrichtung 20. Die in Fig.2 dargestellte Strahloszillation wird durch die relative Vorschubbewegung überlagert.

Es ist möglich, die Strahloszillation so einzustellen, daß sich die aus Fig.2 ersichtliche Bewegungsmöglichkeit der Laserstrahlung 12 relativ zu den Werkstücken 10,11 gemäß der Kurve 25' ergibt. Aus dieser Kurve 25' ist ersichtlich, daß die Strahloszillation genügend groß ist, um die Kanten 10', 11' der Werkstücke 10,11 zu überdecken. Diese werden infolgedessen aufgeschmolzen. Es kommt zu dem aus Fig.1,2 ersichtlichen Schmelzbad 15.

Beim Fügen von Blechen im dargestellten stumpfen Stoß nimmt die Weite des Spaltes 18 häufig Ausmaße an, die zu einer Nahtunterwölbung/Wurzelrückfall führen. Um die Fehlvolumina auszugleichen, wird gemäß Fig.1 ein Zusatzwerkstoff 14 in Drahtform eingesetzt. Dieser Zusatzwerkstoff 14 wird mit einem Schutzgasschweißbrenner 23 zugeführt. Es ergibt sich eine Zuführstelle 16 des Zusatzwerkstoffs 14, an der der Zusatzwerkstoff 14 in das Schmelzbad 15 der Fügestelle 13 eintaucht. Beim Eintauchen in das Schmelzbad 15 wird der Zusatzwerkstoff 14 aufgeschmolzen, so daß etwaige Fehlvolumina im Bereich der Schweißnaht 22 kompensiert werden.

Die Fig.1,2 zeigen, daß die Zuführstelle 16 in einem Abstand b zum Zentrum 17 der Strahloszillation angeordnet ist. Dadurch wird sichergestellt, daß eine direkte Bestrahlung des Zusatzwerkstoffs 14 mit Laserstrahlung 12 ausgeschlossen wird. Dieser Abstand b wird im Hinblick auf die Streckenenergie Eₛ ausgewählt, d.h. nach der pro Nahtlänge eingebrachten Leistung. Andererseits ist der Abstand b klein genug, um zu gewährleisten, daß der Zusatzwerkstoff 14 aufgeschmolzen wird. Die Strahloszillation der Laserstrahlung 12 trägt dazu bei, daß eine innige Durchmischung des Zusatzwerkstoffs 14 mit dem Grundwerkstoff der Kanten 10,11 erfolgt.

Die Strahloszillation der Laserstrahlung 12 wird mit der Bearbeitungsoptik erreicht, die in Fig.1 durch einen Schwingspiegel 24 symbolisiert ist. Der Schwingspiegel ist eine ebene Platte, die entsprechend dem Winkel i zum einfallenden Abschnitt der Laserstrahlung 12 angeordnet ist und sowohl um eine Achse x schwingt, als auch um eine dazu senkrechte Achse y. Das Schwingen bzw. Oszillieren um die Achse x bewirkt ein Oszillieren der Laserstrahlung 12 in Richtung der Vorschubrichtung 20. Das Oszillieren des Spiegels 24 um die Achse y bewirkt ein Oszillieren der Laserstrahlung 12 quer zur Vorschubrichtung 20. Die bauliche Ausführung derartiger Schwingspiegel ist an sich bekannt und wird daher hier nicht näher beschrieben.

Fig.1 zeigt darüber hinaus noch eine Gasdüse 26, mit der Gas auf die Fügestelle 13 geblasen wird, um das sich beim Schweißen ausbildende Plasma zu steuern und dafür zu sorgen, daß die entstehende geschweißte Oberfläche bzw. die Schweißnaht 22 nicht oxidiert wird.

Das Fügeverfahren kann so durchgeführt werden, daß der Zusatzwerkstoff von dem Schutzgasschweißbrenner 23 mit konstanter Zuführrate zugeführt wird. Es ist dann nicht erforderlich, eine sich etwa ändernde Spaltweite zu beobachten und entsprechende Ausregelungen vorzunehmen, etwa die Veränderung der Zuführgeschwindigkeit des Zusatzwerkstoffs 14 oder einen anderen Parameter, wie die Vorschubgeschwindigkeit. Das Fügeverfahren kann aber auch so durchgeführt werden, daß besondere, z.B. die Spaltweite messende Mittel eingesetzt werden, so daß die Spaltweite, aber auch die Kantenvorbereitung erfaßt werden können. Es ist dann möglich, die Strahloszillation entsprechend auszubilden, also bei kleinen Spaltweiten zu verringern. Falls das auch zu einer Verringerung der Strahloszillation in Richtung der Vorschubrichtung 20 führt, ist es möglich, die Zuführrate für den Zusatzwerkstoff 14 zu verkleinern und auch den Abstand b zu verringern. Letzteres ist vorteilhaft, weil bei kleineren Spalten mit größerer Vorschubgeschwindigkeit 20 gearbeitet werden kann, so daß die Ausbildung des Schmelzbades 15 in Richtung der Vorschubrichtung 20 entsprechend kleiner wird. Die Verkleinerung des Abstandes b gewährleistet dann, daß die Aufschmelztemperatur im Schmelzbad 15 für den Zusatzwerkstoff 14 gewährleistet bleibt.

## Patentansprüche

1. Verfahren zum Fügen von Werkstücken (10,11), insbesondere von Grobblechen, mit Laserstrahlung (12), insbesondere mit CO₂-Laserstrahlung, die auf eine Fügestelle (13) fokussiert wird, bei dem ein relativer Vorschub der Werkstücke (10,11) zur Laserstrahlung erfolgt, bei dem der Fügestelle (13) aufschmelzbarer Zusatzwerkstoff (14) in relativer Vorschubrichtung (20) hinter der Laserstrahlung (12) durch Eintauchen in ein Schmelzbad (15) zugeführt wird, und bei dem die Laserstrahlung (12) zusätzlich zu der relativen Vorschubbewegung oszilliert wird, **dadurch gekennzeichnet, daß** eine Zuführstelle (16) des Zusatzwerkstoffs (14) in das Schmelzbad (15) auf einem vorbestimmten Abstand (b) von einem Zentrum (17) der Strahloszillation außerhalb der Laserstrahlung (12) gehalten wird, die im Bereich des Schmelzbades (15) eine Dampfkapillare (22) ausbildet.

2. Verfahren nach Anspruch 1, **dadurch gekennzeichnet, daß** die Strahloszillation überwiegend quer zur Vorschubrichtung (20) der Werkstücke (10,11) erfolgt.

3. Verfahren nach Anspruch 1 oder 2, **dadurch gekennzeichnet, daß** die einen Spalt (18) bildenden Kanten (10',11') der Werkstücke (10,11) beim Oszillieren der Laserstrahlung (12) aufgeschmolzen werden.

4. Verfahren nach einem der Ansprüche 1 bis 3, **dadurch gekennzeichnet, daß** die Strahloszillation mindestens einer Kreisfunktion entsprechend erfolgt.

5. Verfahren nach einem der Ansprüche 1 bis 4, **dadurch gekennzeichnet, daß** der Zusatzwerkstoff (14) mit konstanter oder angepaßter Zuführrate zugeführt wird, die auf eine mittlere Spaltweite des Spaltes (18) zwischen den Werkstückkanten (10',11') optimiert ist.

6. Verfahren nach einem der Ansprüche 1 bis 5, **dadurch gekennzeichnet, daß** trotz der Strahloszillation eine praktisch intensitätskonstante Laserstrahlung (12) verwendet wird.

7. Verfahren nach einem der Ansprüche 1 bis 6, **dadurch gekennzeichnet, daß** der Zusatzwerkstoff (14) als Draht mit einem Schutzgasschweißbrenner (23) zugeführt wird.

## Claims

1. Method of joining workpieces (10, 11), in particular heavy plates, by means of laser beam (12), in particular CO₂-laser beam which is focussed on to a joining point (13), wherein the workpieces (10, 11) are advanced relative to the laser beam, wherein the joining point (13) is supplied with additional meltable material (14) in a relative advance direction (20) behind the laser beam (12) by immersion into a melting bath (15), and wherein in addition to being advanced in a relative manner, the laser beam (12) is oscillated, **characterised in that** a supply point (16) of the additional material (14) into the melting bath (15) is held at a predetermined spacing (b) from a centre (17) of the beam oscillation outside the laser beam (12) which in the region of the melting bath (15) forms a vapour capillary (22).

2. Method as claimed in claim 1, **characterised in that** the beam oscillation is performed predominantly transversely with respect to the advance direction (20) of the workpieces (10, 11).

3. Method as claimed in claim 1 or 2, **characterised in that** the edges (10', 11') of the workpieces (10, 11) forming a gap (18) are melted during oscillation of the laser beam (12).

4. Method as claimed in any one of claims 1 to 3, **characterised in that** the beam oscillation is performed according to at least one circular function.

5. Method as claimed in any one of claims 1 to 4, **characterised in that** the additional material (14) is supplied at a constant or adapted feed rate which is optimised to a mean gap width of the gap (18) between the workpiece edges (10', 11').

6. Method as claimed in any one of claims 1 to 5, **characterised in that** despite the beam oscillation, a laser beam (12) is used which has a practically constant intensity.

7. Method as claimed in any one of claims 1 to 6, **characterised in that** the additional material (14) is supplied as a wire with a shielding gas welding torch (23).

## Revendications

1. Procédé pour assembler des pièces (10, 11), en particulier des tôles fortes, à l'aide d'un rayonnement laser (12), en particulier un rayonnement laser CO₂, qui est focalisé sur un joint (13), selon lequel une avance relative des pièces (10, 11) a lieu par rapport au rayonnement laser, une matière d'apport apte à fondre (14) est amenée sur le joint (13) derrière le rayonnement laser (12), dans le sens d'avance relatif (20), grâce à une immersion dans un bain de fusion (15), et le rayonnement laser (12), en plus du mouvement d'avance relatif, est soumis à une oscillation, **caractérisé en ce qu'**un point d'amenée (16) de la matière d'apport (14) dans le bain de fusion (15) est maintenu à une distance prédéfinie (b) d'un centre (17) de l'oscillation du rayon, à l'extérieur du rayonnement laser (12) qui forme un capillaire de vapeur (22) dans la zone du bain de fusion (15).

2. Procédé selon la revendication 1, **caractérisé en ce que** l'oscillation du rayon se fait essentiellement transversalement par rapport au sens d'avance (20) des pièces (10, 11).

3. Procédé selon la revendication 1 ou 2, **caractérisé en ce que** les bords (10', 11') des pièces (10, 11) qui définissent un interstice (18) fondent lors de l'oscillation du rayonnement laser (12).

4. Procédé selon l'une des revendications 1 à 3, **caractérisé en ce que** l'oscillation du rayon a lieu au moins suivant une fonction circulaire.

5. Procédé selon l'une des revendications 1 à 4, **caractérisé en ce que** la matière d'apport (14) est amenée à une vitesse constante ou adaptée qui est optimisée pour une largeur moyenne de l'interstice (18) entre les bords (10', 11') des pièces.

6. Procédé selon l'une des revendications 1 à 5, **caractérisé en ce que** malgré l'oscillation du rayon, on utilise un rayonnement laser (12) d'intensité pratiquement constante.

7. Procédé selon l'une des revendications 1 à 6, **caractérisé en ce que** la matière d'apport (14) est amenée sous la forme d'un fil avec un chalumeau sous protection gazeuse (23).
